# EUROPEAN PATENT APPLICATION

(11) **EP 0 911 999 A2**
(43) Date of publication of application: **28.04.1999**
(21) Application number: 98119767.6
(22) Date of filing: 22.10.1998
(51) Int. Cl.: H04B 10/158

(54) **Method and device for receiving optical wavelength-multiplexed signal**

(30) Priority: 22.10.1997 JP 289981/97
(71) Applicant: NEC CORPORATION, Tokyo (JP)
(72) Inventor: Shuke, Kanji, Minato-ku, Tokyo (JP)
(74) Representative: VOSSIUS & PARTNER

(57) **Abstract**

Disclosed is a method for receiving optical wavelength-multiplexed signal, the method having the steps of: inputting an optical wavelength-multiplexed signal from an optical transmission line; optically multiplexing direct-current light to the optical wavelength-multiplexed signal; passing the optical wavelength-multiplexed signal where the direct-current light is multiplexed through an optical non- linear element to generate optical wavelength light by four-wave mixing; filtering out an optical signal with a specific optical wavelength from the four-wave mixing wavelength light by adjusting the direct-current light; and converting the optical signal with the specific optical wavelength filtered out into an electrical signal. Also disclosed is a device for receiving optical wavelength-multiplexed signal, the device having: an optical multiplexer to receive an optical wavelength-multiplexed signal from an optical transmission line, and optically multiplex direct-current light from a laser diode with the received signal; an optical non-linear element to receive the output light from the optical multiplexer; an optical wavelength selective filter to filter only one arbitrary wavelength light from the output of the optical non-linear element; and an opto-electric converter to receive the output of the optical wavelength selective filter and convert the one arbitrary wavelength light into an electrical signal.

## Description

This invention relates to optical communication, and more particularly to, a method and a device for receiving optical wavelength-multiplexed signal in light wave network etc.

JP-A-3-192222 (1991) discloses, as shown in FIG. 1, a composition composed of a repeater for optical communication that converts a received optical signal into an optical signal with a reflected spectrum by four-wave mixing, and a next-stage repeater that generates again a reflected spectrum reversely to that in the previous- state repeater. By such a composition, effects caused by dispersion in a material for transmission which may occur on the transmission line can be reduced.

Also, JP-A-3-65932 (1991) discloses, as shown in FIG. 2, an all-optical type optical frequency shifter that controls the code and size of chirp in signal optical pulse and varies arbitrarily the carrier frequency light inputting. By this system, the optical frequency of signal optical pulse can be arbitrarily controlled, thereby minimizing code-to-code interference to adjacent pulse, obtaining a desired pulse waveform with little distortion, and allowing the longer-distance transmission of ultra-short optical pulse with little distortion.

Though Japanese patent application laid-open No.3-192222 (1991) discloses a somewhat analogous point in conception, which is to generate an optical signal with another frequency component by four-wave mixing, to the present invention, its object of invention is quite different from that of the present invention. Namely, this system relates to the repeater where a received optical signal is to be transmitted again as it has a same optical frequency, and therefore cannot freely select an arbitrary optical wavelength signal from wavelength-multiplexed optical signal.

Though Japanese patent application laid-open No.3-65932 (1991) discloses a somewhat analogous point in conception, which is to positively use the four-wave mixing, to the present invention, its object of invention is still quite different from that of the present invention. Namely, that object is only to realize the long-distance transmission. Thus, even when using this system, it cannot freely select an arbitrary optical wavelength signal from wavelength-multiplexed optical signal.

Accordingly, it is an object of the invention to provide a method for receiving optical wavelength-multiplexed signal that an arbitrary optical wavelength can be selected by using one receiving circuit for wavelength division multiplexing (WDM) system in light-wave network.

It is a further object of the invention to provide a device for receiving optical wavelength-multiplexed signal that an arbitrary optical wavelength can be selected by using one receiving circuit for wavelength division multiplexing (WDM) system in light-wave network.

According to the invention, a method for receiving optical wavelength-multiplexed signal, comprises the steps of:
inputting an optical wavelength-multiplexed signal from an optical transmission line;
optically multiplexing direct-current light to the optical wavelength-multiplexed signal;
passing the optical wavelength-multiplexed signal where the direct-current light is multiplexed through an optical non-linear element to generate optical wavelength light by four-wave mixing;
filtering out an optical signal with a specific optical wavelength from the four-wave mixing wavelength light by adjusting the direct-current light; and
converting the optical signal with the specific optical wavelength filtered out into an electrical signal.

According to another aspect of the invention, a device for receiving optical wavelength-multiplexed signal, comprises:
an optical multiplexer to receive an optical wavelength-multiplexed signal from an optical transmission line, and optically multiplex direct-current light from a laser diode with the received signal;
an optical non-linear element to receive the output light from the optical multiplexer;
an optical wavelength selective filter to filter only one arbitrary wavelength light from the output of the optical non-linear element; and
an opto-electric converter to receive the output of the optical wavelength selective filter and convert the one arbitrary wavelength light into an electrical signal.

In the optical wavelength-multiplexed signal receiving system according to the invention, which comprises the wavelength variable laser diode, optical multiplexer, optical non-linear element, optical wavelength selective filter, and opto-electric converter, an optical wavelength-multiplexed signal and direct-current light from the wavelength variable laser diode are multiplexed by the optical multiplexer, and then the four-wave mixing occurs through the optical non-linear element. The pass band of the optical wavelength selective filter is fixed.

To match output light of the optical non-linear element with the fixed wavelength band of the optical wavelength selective filter can be conducted by changing the wavelength of the wavelength variable laser diode.

When the frequencies of optical wavelength-multiplexed signal are f1, f2, f3 ...., fn and the frequency of direct-current light of the wavelength variable laser diode is fx (fx>f1, f2,....., fn), an optical wavelength generated by the four-wave mixing in the optical non-linear element becomes 2fx-fi or 2fi-fx (i=1,2,...., n).

Thus, when the pass band of the wavelength filter is fc, an arbitrary optical wavelength can be selected by adjusting the direct-current light wavelength fx of the wavelength variable laser diode to be fc=2fx-fi or fc=2fi-fx. The selected wavelength signal can be received through the opto-electric converter.

With these operations, the receiver can arbitrarily select and receive all wavelengths of the optical wavelength-multiplexed signal.

The invention will be explained in more detail in conjunction with the appended drawings, wherein:
FIG.1 is a block diagram showing a repeater disclosed in Japanese patent application laid-open No.3-192222.

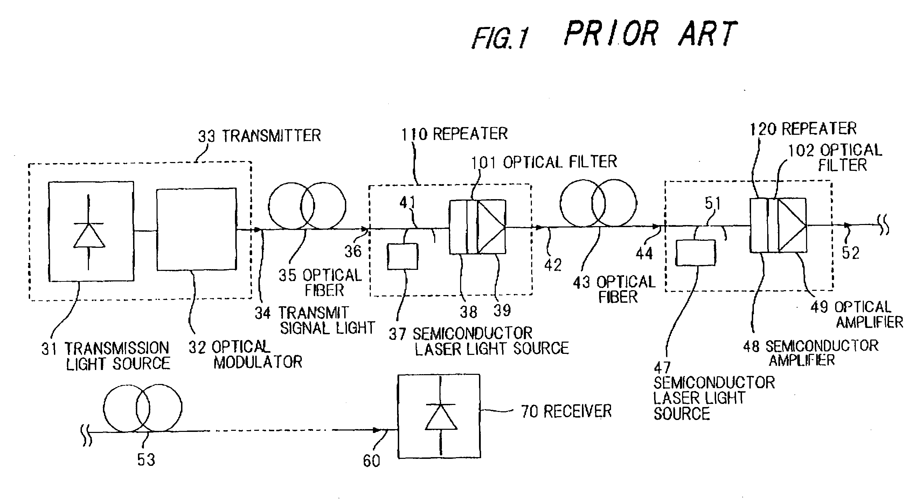

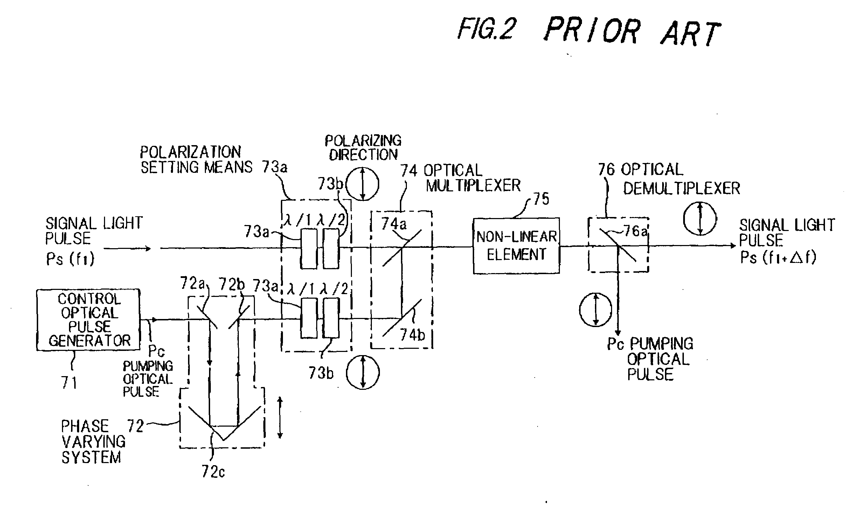

FIG.2 is a block diagram showing an all-optical type optical frequency shifter disclosed in Japanese patent application laid-open No.3-65932,
FIG.3 is a flow chart showing a method for receiving optical wavelength-multiplexed signal in a preferred embodiment according to the invention,
FIG.4 is a block diagram showing a device for receiving optical wavelength-multiplexed signal in a preferred embodiment according to the invention, and
FIG.5 is an illustration showing an optical wavelength generating characteristic by four-wave mixing in the receiving device in FIG.4.

Next, the preferred embodiments according to the invention will be detailed referring to the drawing.

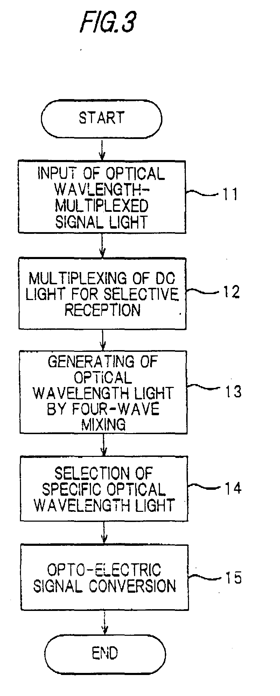

FIG.3 is a basic flow chart showing a method for receiving optical wavelength-multiplexed signal in the embodiment.

When an optical-wavelength-multiplexed signal light is input (step 11), it is optically multiplexed with a direct-current light for selective reception to be selected in advance (step 12)

Then, the multiplexed light is supplied to a non-linear element to occur the four-wave mixing (step 13), light with a specific wavelength predetermined is selectively output by algorithm of being optically multiplexed at step 12 (step 14), and light with the specific wavelength is converted into an electrical signal (step 15) It is also applicable when this electrical signal is time-division or analogue.

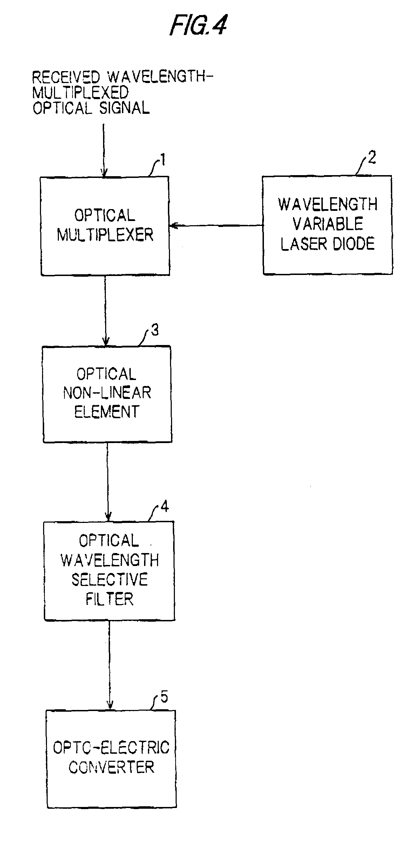

FIG.4 is a block diagram showing a receiving device suitable to use the method for receiving optical wavelength-multiplexed signal in the preferred embodiment. The receiving device of this embodiment comprises an optical multiplexer 1 to receive an optical wavelength-multiplexed signal from the optical transmission line and to optically multiplex direct-current light from a wavelength variable laser diode 2 and then output it, an optical non-linear element 3 to receive output light from the optical multiplexer 1, an optical wavelength selective filter 4 to filter only an arbitrary optical wavelength from the output of the optical non-linear element 3, and an opto- electric converter 5 to convert an optical signal into an electrical signal.

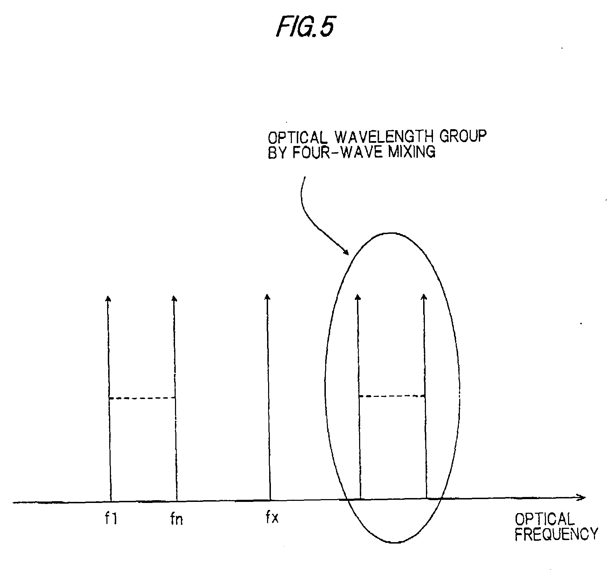

In operation, an optical wavelength-multiplexed signal input from the optical transmission line is optically multiplexed with direct-current light from the wavelength variable laser diode 2, input to the optical non-linear element 3. In the optical signal passed through the optical non-linear element 3, there occur optical wavelengths by the four-wave mixing as shown in FIG.5. For example, when the optical frequencies of optical wavelength-multiplexed signal from the optical transmission line are f1, f2 ...., fn and the optical frequency of direct-current light of the wavelength variable laser diode 2 is fx, an optical wavelength group by the four-wave mixing is to be 2fx-fn, ...., 2fx-f2, 2fx-f1.

Namely, the optical wavelength group by the four-wave mixing can be varied by changing the optical frequency fx of direct-current light by adjusting the wavelength variable laser diode 2.

Therefore, by changing fx so as to equalize one optical frequency of the optical wavelength group by the four-wave mixing with the pass band fc of the optical wavelength selective filter 4, only one optical-wavelength signal can be input to the opto-electric converter 5.

The first advantage of the invention is that an arbitrary one can be received being freely selected from several optical signals to be transmitted.

This is because a signal to pass through the optical wavelength selective filter can be freely selected by changing the frequency of output light of the variable wavelength laser diode.

The second advantage of the invention is that the receiving device has a composition suitable for mass production.

Namely, the device only has to have one kind of optical wavelength selective filter regardless of the number of multiplexed wavelengths.

## Claims

1. A method for receiving optical wavelength-multiplexed signal, comprising the steps of:
inputting an optical wavelength-multiplexed signal from an optical transmission line;
optically multiplexing direct-current light to said optical wavelength-multiplexed signal;
passing said optical wavelength-multiplexed signal where the direct-current light is multiplexed through an optical non-linear element to generate optical wavelength light by four-wave mixing;
filtering out an optical signal with a specific optical wavelength from the four-wave mixing wavelength light by adjusting
the direct-current light; and converting said optical signal with the specific optical wavelength filtered out into an electrical signal.

2. A method for receiving optical wavelength-multiplexed signal, according to claim 1, further comprising the step of:
changing the frequency of said direct-current light so as to correspond to the frequency of light with said specific optical wavelength to be filtered through.

3. A method for receiving optical wavelength-multiplexed signal, according to claim 1 or 2, wherein:
said converting step is conducted to convert said optical signal into a PCM signal.

4. A method for receiving optical wavelength-multiplexed signal, according to claim 1 or 2, wherein:
said converting step is conducted to convert said optical signal into an analogue signal.

5. A device for receiving optical wavelength-multiplexed signal, comprising:
an optical multiplexer to receive an optical wavelength-multiplexed signal from an optical transmission line, and optically multiplex direct-current light from a laser diode with the received signal;
an optical non-linear element to receive the output light from said optical multiplexer;
an optical wavelength selective filter to filter only one arbitrary wavelength light from the output of said optical non-linear element; and
an opto-electric converter to receive the output of said optical wavelength selective filter and convert said one arbitrary wavelength light into an electrical signal.

6. A device for receiving optical wavelength-multiplexed signal, according to claim 5, wherein:
said laser diode is of wavelength-variable type.

7. A device for receiving optical wavelength-multiplexed signal, according to claim 5 or 6, wherein:
said opto-electric converter can receive a PCM signal.

8. A device for receiving optical wavelength-multiplexed signal, according to claim 5 or 6, wherein:
said opto-electric converter can receive an analogue modulation signal.
